# EUROPEAN PATENT APPLICATION

(11) **EP 4 625 186 A1**
(43) Date of publication of application: **01.10.2025**
(21) Application number: 25156583.4
(22) Date of filing: 07.02.2025
(51) Int. Cl.: G06F 12/1027, G06F 12/14

(54) **APPARATUS AND METHOD FOR SECURE HARDWARE-BASED MEMORY MANAGEMENT UNIT FOR MULTI-HOST SYSTEMS**

(30) Priority: 28.03.2024 US 202418621030
(71) Applicant: INTEL Corporation, Santa Clara, CA 95054 (US)
(72) Inventor: THIRUMANDAS, Suresh, Cupertino, CA, 95014 (US); PISKE, Mayuresh, 560035 Bangalore (IN); SUBRAMANI, Shankar, 560043 Bengaluru (IN); WILKINSON, Hugh, Newton, MA, 02459 (US); CHAKKA, Sunil, Cupertino, CA, 95014 (US); KUMAR, Ajaya, 500075 Hyderabad, Telangana (IN)
(74) Representative: Samson & Partner Patentanwälte mbB

(57) **Abstract**

Techniques for hardware-based secure memory management. An example apparatus comprises: a NoC interconnect fabric; first interface circuitry to couple host processors to the NoC interconnect fabric; a hardware memory manager coupled to the NoC interconnect fabric, the hardware memory manager comprising: page table circuitry to store page management information in a plurality of page table entries (PTEs), each PTE corresponding to a TLB entry, the page management information including a host identifier (ID) field to indicate a host processor associated with the PTE entry; a memory management controller to perform security checks on commands received from the host processors, wherein responsive to a first command from a first host processor to perform an allocation or deallocation of a first TLB entry, the memory management controller is to prevent the allocation or deallocation if a first host ID if the first PTE does not correspond to the first host processor.

## Description

### BACKGROUND

### Field of the Invention

This invention relates generally to the field of computer processors. More particularly, the invention relates to an apparatus and method for secure hardware-based memory management unit for multi-host systems.

### Description of the Related Art

Various challenges exist to ensure data privacy in a shared memory environment across multiple hosts in an SoC architecture. Updating the memory management units (MMUs) of multiple hosts that share common memory poses vulnerabilities to data privacy, performance degradation, and reduced efficiency. The dynamic nature of MMU updates across multiple hosts mandates synchronization to prevent and ensure the efficient allocation, deallocation, and sharing of memory.

### BRIEF DESCRIPTION OF THE DRAWINGS

A better understanding of the present invention can be obtained from the following detailed description in conjunction with the following drawings, in which:
**FIG. 1** illustrates an example computer system architecture;
**FIG. 2** illustrates a processor comprising a plurality of cores;
**FIG. 3A** illustrates a plurality of stages of a processing pipeline;
**FIG. 3B** illustrates details of one embodiment of a core;
**FIG. 4** illustrates execution circuitry in accordance with one embodiment;
**FIG. 5** illustrates one embodiment of a register architecture;
**FIG. 6** illustrates one example of an instruction format;
**FIG. 7** illustrates addressing techniques in accordance with one embodiment;
**FIG. 8** illustrates one embodiment of an instruction prefix;
**FIGS. 9A-D** illustrate embodiments of how the R, X, and B fields of the prefix are used;
**FIGS. 10A-B** illustrate examples of a second instruction prefix;
**FIG. 11** illustrates payload bytes of one embodiment of an instruction prefix;
**FIG. 12** illustrates instruction conversion and binary translation implementations;
**FIGS. 13A-B** illustrates architectural components of some embodiments of the invention;
**FIG. 14** illustrates a hardware memory manager in accordance with embodiments of the invention;
**FIG. 15A** illustrates an embodiment of a memory management input command;
**FIG. 15B** illustrates an embodiment of a hardware page table entry;
**FIG. 15C** illustrates an embodiment of a translation lookaside buffer (TLB) entry;
**FIG. 16** illustrates an example sequence of operations performed by a hardware memory management controller;
**FIG. 17** illustrates a method for a memory management configurational mode in accordance with embodiments of the invention; and
**FIGS. 18A-B** illustrates a method for a memory management operational mode in accordance with embodiments of the invention.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### Exemplary Computer Architectures

Detailed below are descriptions of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

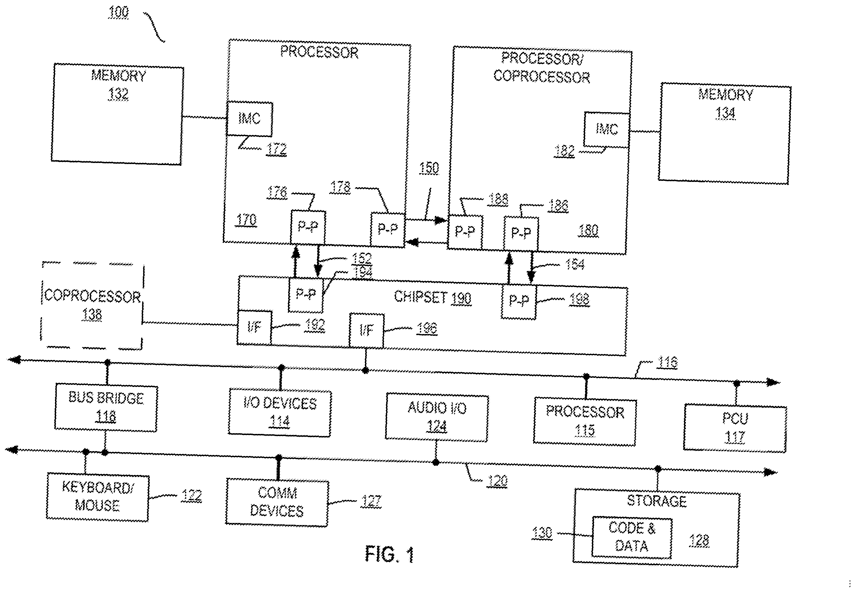

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

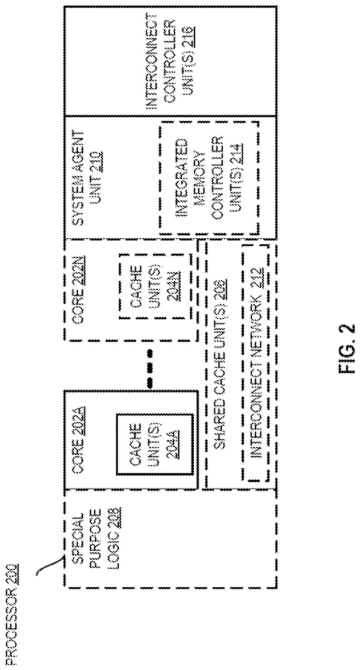

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1****.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

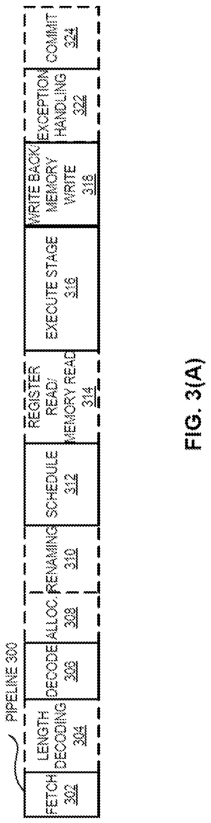

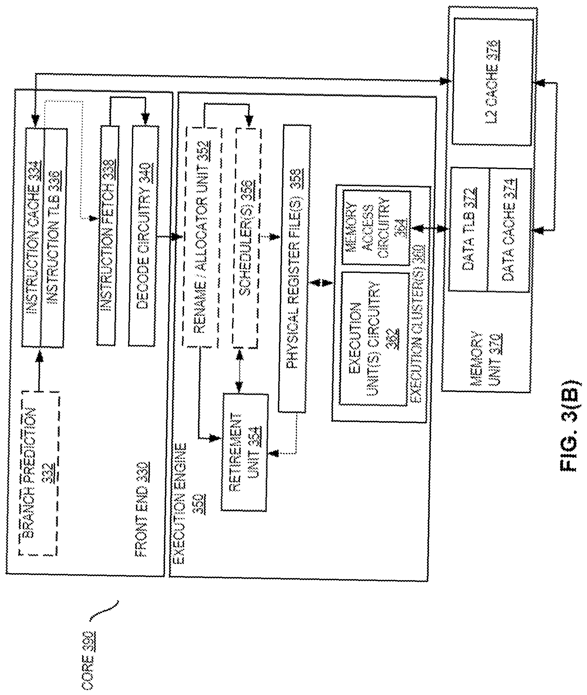

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A)****,** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unit(s) Circuitry

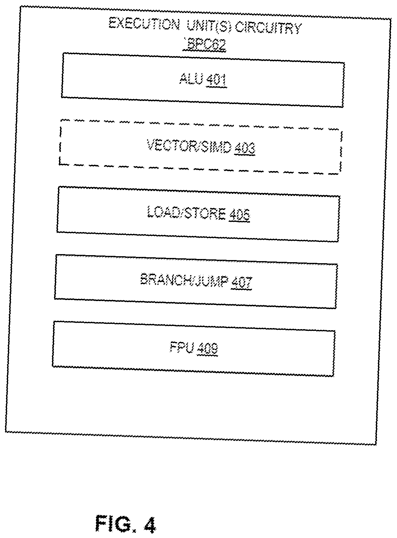

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

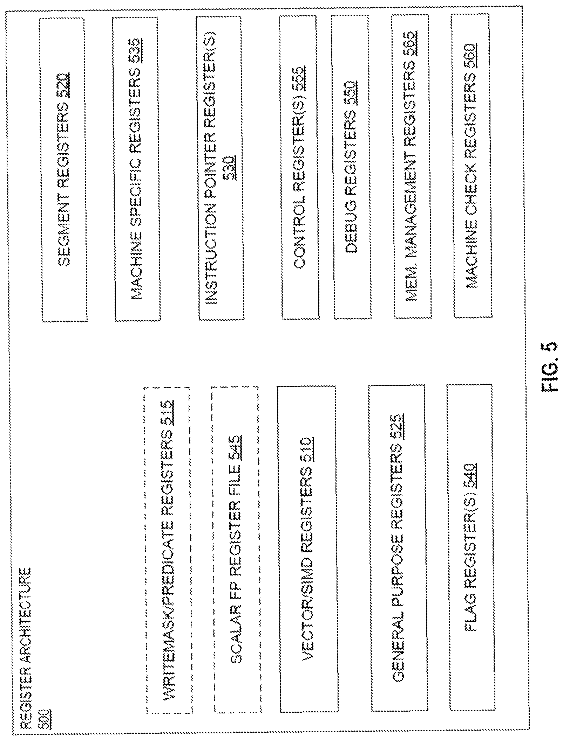

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

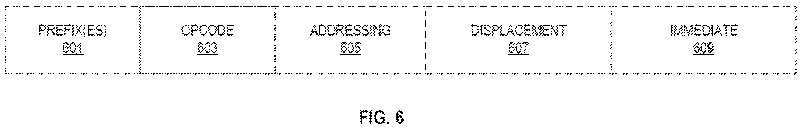

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

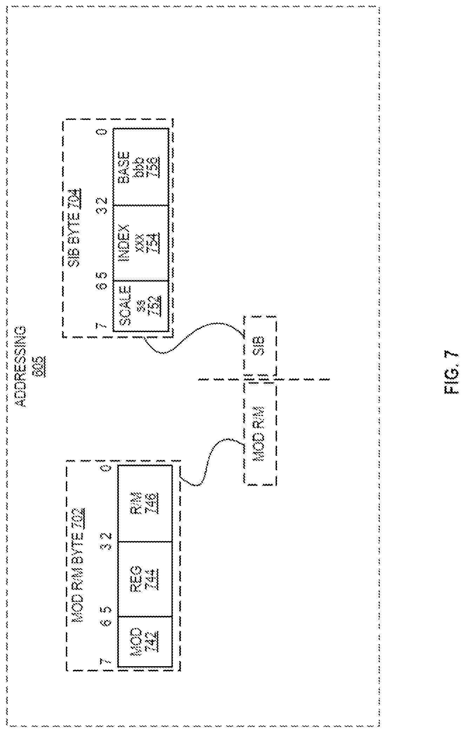

The addressing field 605 is used to address one or more operands of the instruction, such as a location in memory or one or more registers. **FIG. 7** illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

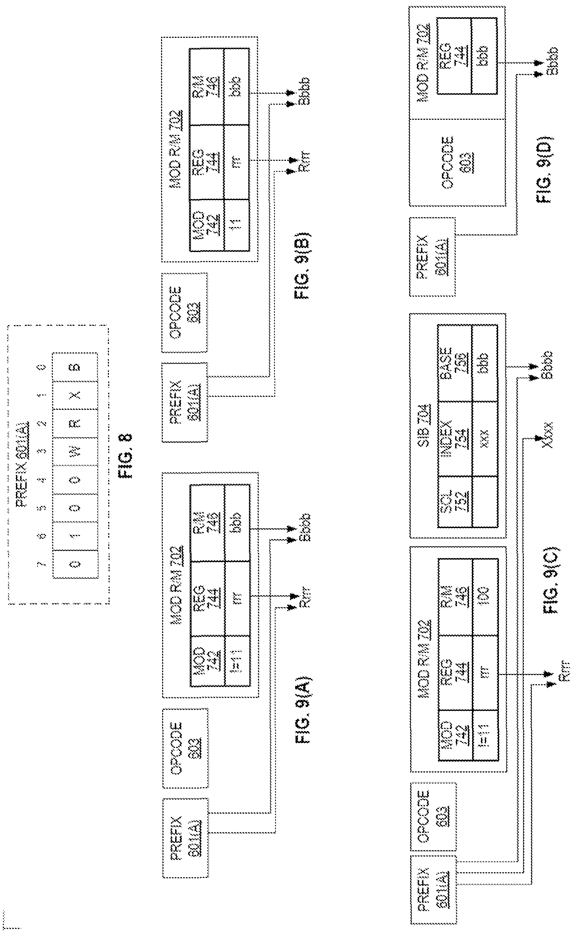

**FIG. 8** illustrates embodiments of a first prefix 601 (A). In some embodiments, the first prefix 601 (A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601 (A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)****-(D)** illustrate embodiments of how the R, X, and B fields of the first prefix 601 (A) are used. **FIG. 9(A)** illustrates R and B from the first prefix 601 (A) being used to extend the reg field 744 and R/M field 746 of the MOD R/M byte 702 when the SIB byte 7 04 is not used for memory addressing. **FIG. 9(B)** illustrates R and B from the first prefix 601 (A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

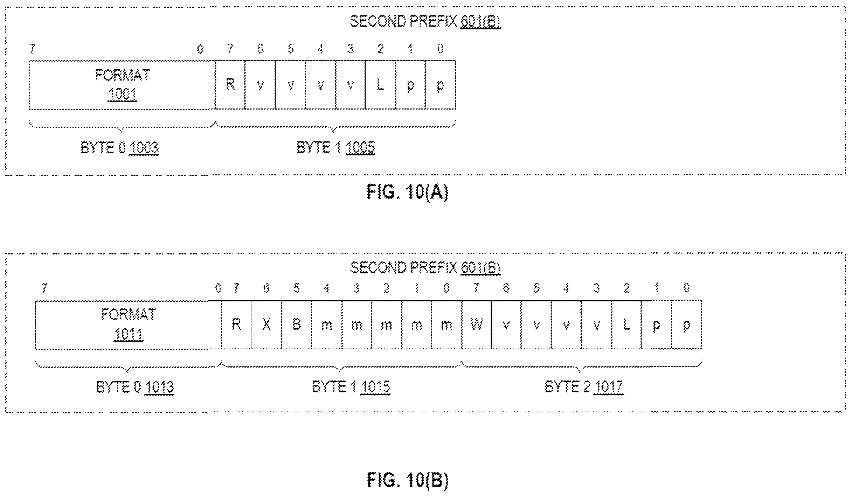

**FIGS. 10(A)****-(B)** illustrate embodiments of a second prefix 601 (B). In some embodiments, the second prefix 601 (B) is an embodiment of a VEX prefix. The second prefix 601 (B) encoding allows instructions to have more than two operands, and allows SIMD vector registers (e.g., vector/SIMD registers 510) to be longer than 64-bits (e.g., 128-bit and 256-bit). The use of the second prefix 601 (B) provides for three-operand (or more) syntax. For example, previous two-operand instructions performed operations such as A = A + B, which overwrites a source operand. The use of the second prefix 601 (B) enables operands to perform nondestructive operations such as A = B + C.

In some embodiments, the second prefix 601 (B) comes in two forms - a two-byte form and a three-byte form. The two-byte second prefix 601 (B) is used mainly for 128-bit, scalar, and some 256-bit instructions; while the three-byte second prefix 601 (B) provides a compact replacement of the first prefix 601 (A) and 3-byte opcode instructions.

**FIG. 10(A)** illustrates embodiments of a two-byte form of the second prefix 601 (B). In one example, a format field 1001 (byte 0 1003) contains the value C5H. In one example, byte 1 1005 includes a "R" value in bit[7]. This value is the complement of the same value of the first prefix 601 (A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

**FIG. 10(B)** illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

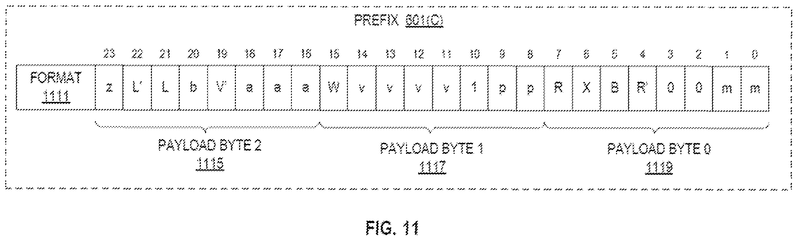

**FIG. 11** illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as **FIG.** 5) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

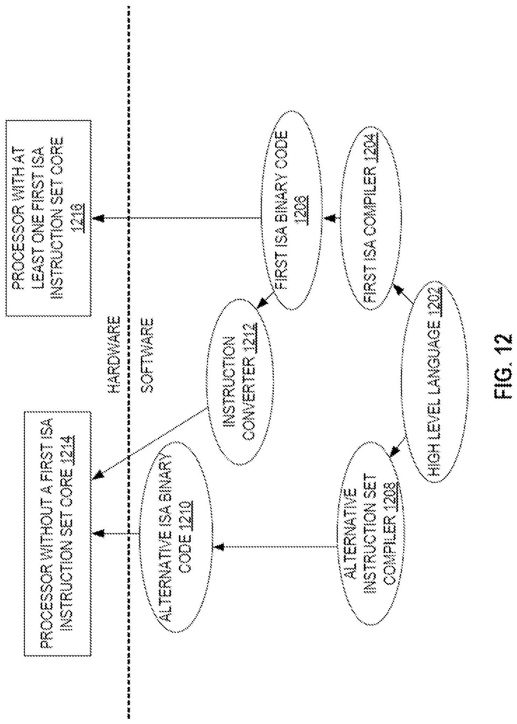

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA a binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

### APPARATUS AND METHOD FOR SECURE HARDWARE-BASED MEMORY MANAGEMENT UNIT FOR MULTI-HOST SYSTEMS

Various challenges exist to ensuring data privacy across multiple hosts in an SoC architecture - particularly when shared virtual memory (SVM) is implemented. For example, updating the memory management units (MMUs) of multiple hosts that share common memory translations poses vulnerabilities to data privacy, performance degradation, and reduced efficiency. The dynamic nature of MMU updates across multiple hosts mandates synchronization to prevent and ensure the efficient allocation, deallocation, and sharing of memory.

Embodiments of the invention safeguard data privacy among multiple hosts sharing common memory by preventing erroneous MMU programming. At least some of these embodiments are fully implemented in hardware to perform MMU updates and mitigate challenges associated with potential software vulnerabilities. In particular, a hardware memory manager (HWMM) is implemented as a security IP block designed for managing TLBs, enabling the programming of TLB functions such as page allocations and deallocations, and memory channel interleaving. In some implementations, the HWMM also includes features to zero out memory, implement a HWMM page table for tracking dynamic configuration changes of memory pages across multiple hosts, and facilitate page sharing between hosts.

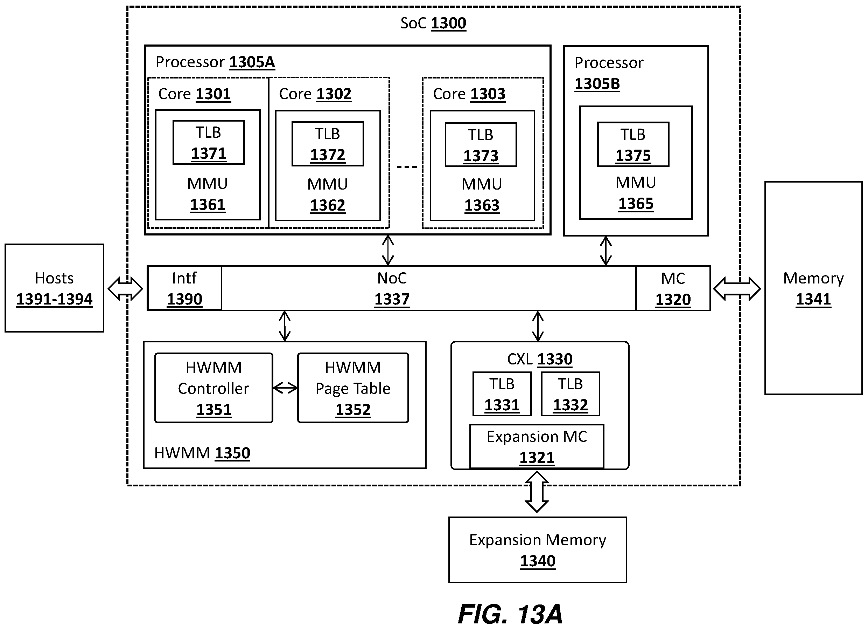

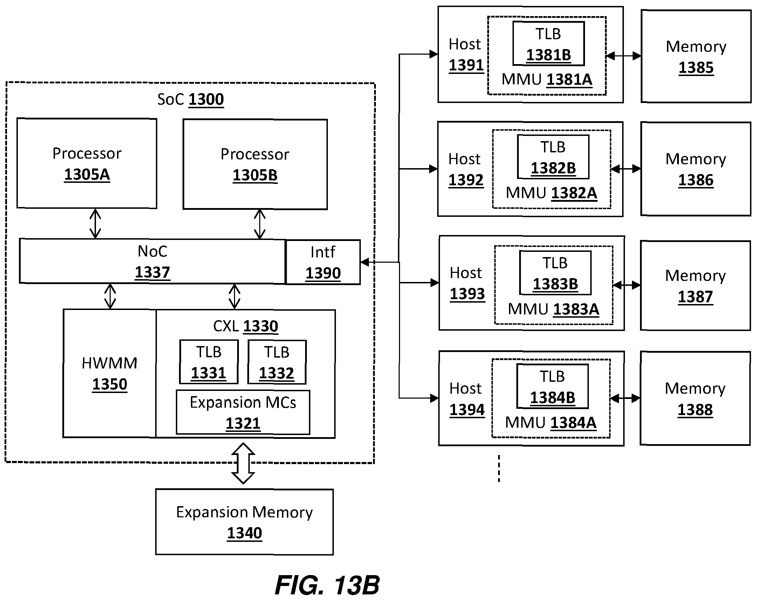

**Figure 13A-B** illustrates example implementations of an SoC 1300 including a first processor 1305A with a plurality of cores 1301-1303 and a second processor 1305B which may (or may not) be heterogeneous with respect to the first processor 1305A. An interface 1390 connects a plurality of hosts 1391-1394 to the expansion memory 1340 via the NoC 1337 and CXL interface/control circuitry 1330 (shown in greater detail in **Figure 13B****).** The hosts 1391-1394 may be implemented on various types of potentially heterogeneous processors including, but not limited to, general purpose processors, general purpose graphics processing units (GPGPUs), digital signal processors (DSP), machine learning/matrix accelerators, or any other type of processor or accelerator. An SoC memory 1341 accessible via a network on chip (NoC) interconnect fabric 1337 and memory controller 1340 may be shared by the first and second processors 1305A-B, respectively, while performing the operations described herein. In some implementations, the second processor 1305B supports a different microarchitecture and/or electrical characteristics than the first processor 1305A. In some implementations, the second processor 1305B may support an entirely different instruction set than the first processor 1305A, or may support a subset of the instructions supported by the first processor 1305A. The underlying principles of the invention are not limited to any particular types of processors used in the SoC. Each of the cores 1301-1303 includes a memory management unit 1361-1363, respectively, and corresponding TLB 1371-1373 for storing virtual-to-physical address translations to access the SoC memory 1341. Similarly, processor 1305B may include an MMU 1365 and TLB 1375 for performing virtual-to-physical address translations.

In some embodiments, a hardware memory manager (HWMM) 1350 with a corresponding HWMM page table 1352 and HWMM controller 1351 is coupled via the NoC interconnect fabric 1337 for implementing the secure memory management techniques described herein to allow the hosts 1391-1394 to efficiently and securely access the expansion memory 1340. In some implementations, the hosts 1391-1394 are operated on host processors in different SoCs, different processor packages, and/or different computing systems coupled to the interface 1390 via a network fabric (e.g., supporting PCIe/CXL.mem). In these embodiments, the separate host processors may implement the shared memory techniques described herein to share data.

In the illustrated example, CXL interface/control circuitry 1330 is coupled to the NoC 1337, to provide access to the expansion memory 1340, via one or more expansion memory controllers 1321. The CXL interface/control circuitry 1330 may also include one or more TLBs 1331-1332 to store address translations for accesses to the expansion memory 1340. In these implementations, the TLBs 1331-1332 store translations between device physical addresses (DPAs) and local memory addresses (LMAs), which are used by the expansion memory controllers 1321 to access the expansion memory devices 1340.

Referring to **Figure 13B****,** one embodiment of the SoC 1300 configured to couple a plurality of external hosts 1391-1394 to the expansion memory 1340 via the CXL interface/control circuitry 1330, using the HWMM 1350 as described herein. By way of example, and not limitation, the expansion memory 1340 may include a pool of memory devices dynamically allocated to the various hosts 1391-1394 by the CXL interface/control circuitry 1330. In one particular implementation, a CXL Type 3 Multiple Logical Device (MLD) implementation is used for the expansion memory 1340 to scale up memory capacity beyond the capacity provided by the host-attached memories 1385-1388. In this implementation, the interface(s) 1390 may implement CXL/memory semantics to couple the hosts 1391-1394 to the CXL interface/control circuitry 1330. In some embodiments, the SoC 1300 is integrated on a memory expansion card inserted in a PCIe/CXL of a compute system which includes or is coupled to the hosts 1391-1394.

As illustrated, each host 1391-1394 may include a separate MMU 1381A-1384A, respectively, with a corresponding TLB 1381B-1384B, respectively. When expansion memory 1340 is used to expand the available host physical address space, the TLBs 1381B-1384B may store address translations of virtual addresses (e.g., guest virtual addresses or guest physical addresses in a virtualized environment) to host physical addresses, some of which are located in a corresponding attached memory 1385-1388 and others which are located in the expansion memory 1340. The host physical addresses located in the expansion memory are referred to as device physical addresses (DPAs), which are provided to the CXL interface/ control circuitry 1330 to access expansion memory 1340. The DPAs are translated to local memory addresses (LMAs) within the CXL interface/control circuitry 1330 and the LMAs provided to the expansion memory controllers 1321 to access the physical location in expansion memory 1340. The DPA-LMA translations may be cached in the CXL interface/control circuitry TLBs 1331-1332 and the HWMM page tables, as described further below.

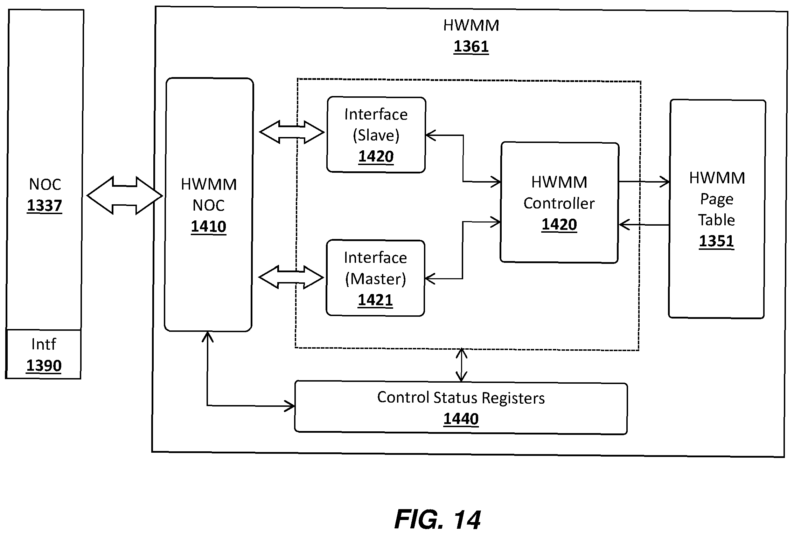

**Figure 14** illustrates a hardware memory manager (HWMM) 1350 in accordance with some embodiments. When a TLB, such as TLB 1381B, needs to be updated on one of the hosts 1391 (e.g., in response to a TLB invalidate instruction or a page table update), the host 1391 directs a command to the HWMM 1361, which is routed via the NoC 1337 and an internal NoC 1310 of the HWMM 1361. An interface 1420-1421 provides the command to the HWMM controller 1420, which manages the HWMM page table 1352 in accordance wit configuration settings specified in one or more control and status registers 1440 (e.g., which may be programmed by privileged firmware/software). In one embodiment, the HWMM controller 1420 is implemented as a finite state machine (FSM), although the underlying principles of the invention are not limited to any particular controller architecture.

In some implementations, each interface 1420-1421 is an Advanced eXtensible Interface (AXI) interface, with a first interface 1421 operating as a master through which the HWMM controller 1420 generates memory access requests, such as memory read and write operations and a second interface 1420 operating as a slave interface which receives and processes requests from other master interfaces in the architecture (e.g., such as commands received from hosts 1391-1394). Note, however, that the underlying principles of the invention are not limited to any particular interface types.

Upon receiving the input command via an interface 1420, the HWMM controller 1420 may perform a plurality of security checks/operations. For example, the HWMM controller 1420 may read the HWMM page table 1351, read the host TLB 1371, and interleave invalid and valid host check conditions as described further below. The HWMM controller 1420 may subsequently update the HWMM page table 1351 and send write data back to SoC NoC 1405 (e.g., via interface 1421 and HWMM NOC 1410) to perform secure TLB updates to the other host TLBs 1381B-1384B.

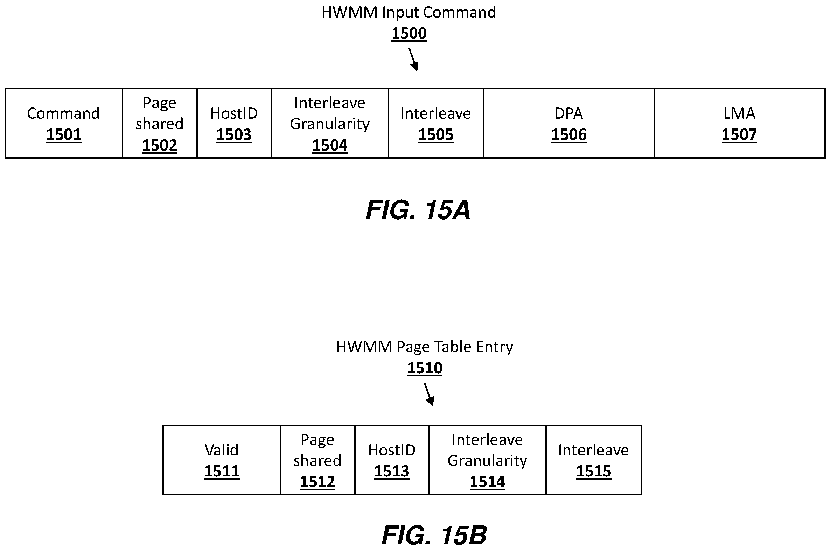

In some embodiments, the input command includes the plurality of fields to specify the operations to be performed. **Figure 15A** illustrates one embodiment of an HWMM command 1500, which includes a "command" field 1501 to indicate a particular operation to be performed, such as deletion of a TLB entry, addition of a new TLB entry, or addition of a new host to an existing TLB entry. A "page shared" field 1502 may provide an indication as to whether the corresponding memory page is shared, and a HostID field 1503 to indicate a particular host and potentially a CXL port identifier. In one embodiment, the HostID field is a one-hot encoded field for representing hosts (i.e., a binary vector, where one bit is 'hot' or set to '1' to indicate a particular host, while the other bits are set to 0). This encoding permits multiple hosts to enable the TLB programming for allocation, deallocation, or page sharing and aids in tracking each host as well as multiple hosts for sharing the same page.

An "interleave" field 1505 indicates whether memory interleaving is to be used and, if so, may indicate a particular interleave pattern (e.g., indicating a set of memory controllers to perform interleave operations or a single memory controllers if interleaving is not used). Interleaving is a memory access technique where consecutive memory locations are distributed across multiple memory modules or a banks. Interleaving distributed memory accesses across different memory banks can improve throughput and reduce access latency. An "interleave granularity" field 1504 indicates a data chunk size for interleaving operations (e.g., 256 Bytes, 2040 Bytes, 16384 Bytes, etc).

Finally, an "LMA" field 1507 indicates a Logical Memory Address (LMA) associated with the command and a "DPA" field 1506 indicates the corresponding Device Physical Address (DPA). As mentioned, the HWMM page table 1351 may be indexed with the LMA while the DPA is the physical address provided by the host in response to a memory access request, and which is used to index the TLBs 1331-1332 to determine the corresponding LMA.

**Figure 15B** illustrates an embodiment of an HWMM page table entry 1510 indexed using an LMA field as described. The page table entry 1510 includes a valid field 1511 to indicate if the entry is valid, a "page shared" field 1512 to indicate whether the corresponding memory page is shared, and a HostID field 1513 to indicate a particular host and potentially a CXL port identifier. As previously described, the HostID field 1513 may be a one-hot encoded field. The interleave granularity field 1514 and interleave field 1515 operate as described with respect to the input command 1500.

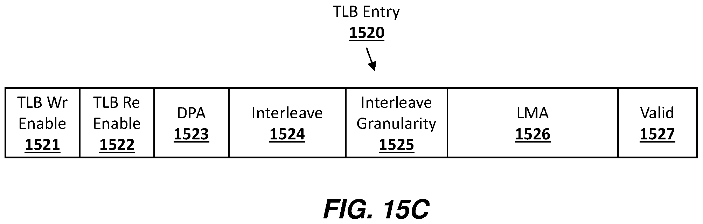

**Figure 15C** illustrates an embodiment of a TLB entry 1520 for a TLB 1331-1332 of the CXL interface/control circuitry 1330. A TLB write enable field 1521 and TLB read enable field 1522 indicate whether the entry can be written or read, respectively. A DPA field 1523 provides the device physical address and an LMA field 1526 provides the corresponding local memory address 1526. The interleave field 1524, interleave granularity field 1525, and valid field 1527 operate as previously described with respect to **Figures 15A-B.**

Embodiments of the invention safeguard data privacy among the multiple hosts 1391-1394 which share the expansion memory 1340 by preventing erroneous page table programming. This is accomplished using the HWMM 1361, which is fully implemented in hardware to perform page table updates, thereby mitigating challenges associated with potential software vulnerabilities.

In some embodiments, the HWMM 1361 operates in two modes: a configurational mode and an operational mode. Software and/or firmware (e.g., operating at a sufficient privilege level) can select the operational mode, while configurational mode can be selected only via a power reset signal (e.g., a power good reset) or other designated hardware control signal.

In one embodiment, the HWMM configurational mode is used for configuring the HWMM page table 1351 and initializing the various TLBs 1381B-1384B of the host(s) 1391-1394, respectively. In one particular implementation, the following fields of the input command 1500 received by the HWMM 1361 are configured and stored by the HWMM controller 1420 into the HWMM page table 1351: Interleave 1505, Page Shared Enable 1502 by Particular Entry, and Interleave Granularity 1504. These fields are restricted from being overwritten while the HWMM 1361 is in operational mode.

The HWMM controller 1420 additionally performs checks to detect and prohibit conditions such as selection of invalid expansion memory controller (MC) 1321 and invalid host identification during page deallocation operations. The page allocation operations executed by the HWMM controller 1420 configure the HWMM page table 1351, considering valid the LMA included with the input command. Once the configuration operations are complete, the HWMM controller 1420 triggers the initialization of the host TLB's 1381B-1384B using valid DPAs corresponding to the LMAs.

In some embodiments, the HWMM operational mode is entered after successful configurational mode operations. The operational mode is utilized to update the HWMM page table 1351 for tracking subsequent page allocations and deallocations. For example, in response to page allocation requests from a host processor 1391-1394, the HWMM controller 1420 performs corresponding page table updates to the HWMM page table 1351. In addition, the HWMM controller 1320 subsequently initiates the programming of the various host processor TLBs 1381B-1384B. In response to page deallocations, the HWMM controller 1420 performs corresponding page table 1351 invalidations (i.e., flushing/ invalidating corresponding page table entries based on LMAs), and subsequently triggering corresponding invalidations of the host processor TLBs 1391-1394.

In some embodiments, each page allocation operation performed by the HWMM controller 1420 includes validation checks to ensure that the page table 1351 does not include entries for the pages to be allocated which are currently associated with other host processors. Additionally, the HWMM controller 1420 reads the TLB entries to ensure that there are no corresponding valid TLB entries (i.e., with a valid DPA) associated with other host processors. Following the page validations, the HWMM controller 1420 validates the page entry and updates the page table 1351 with the new host mapping, enabling interleave select, and initiating/enabling programming of the corresponding TLBs entries.

Similarly, the HWMM controller 1420 performs page deallocation operations by first performing validation checks. The HWMM controller 1420 may read the HWMM page table 1351 to ensure that no entries corresponding to the pages are associated with other hosts. Subsequently, the HWMM controller 1420 reads the TLB entry corresponding to the page deallocation (e.g., on a valid DPA) to verify that the corresponding LMA matches the LMA specified in the input command. The HWMM controller 1420 then invalidates the page entry and updates the HWMM page table 1351 with an indication of the new host (e.g., clearing the HostID field if it is the last entry left in HWMM page table 1351), enabling interleave select and initiating/enabling programming of the TLB entry deallocation.

Some embodiments of the HWMM 1361 supports page share operations to share certain pages between multiple hosts 1391-1394, as indicated by the page shared 1512 indication in the page table entry. To implement page sharing, the HWMM controller 1420 reads the HWMM page table 1351, restricting access to any invalid entry which is currently allocated by other hosts. Additionally, it restricts the condition during configuration mode if the page share bit on the same entry is not currently set by other hosts. Subsequently, it reads the TLB entry in the TLBs of the hosts on a valid DPA and restricts access if the entry is allocated in those TLBs. The HWMM controller 1420 also checks and restricts access if the DPA exceeds the predefined DPA limit for page sharing. If these checks pass, then the HWMM controller 1420 validates the corresponding page table entry and updates the page table with an indication of the new hosts, enabling interleave select and initiating/enabling programming of the TLB allocation.

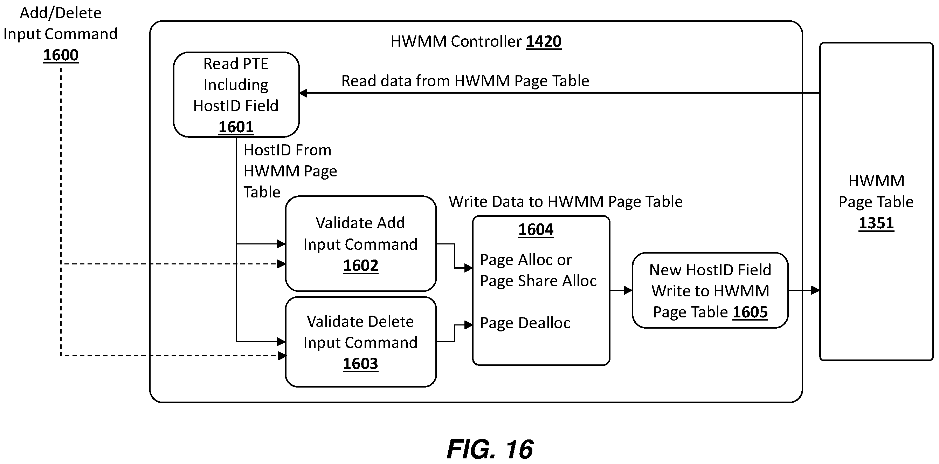

**Figure 16** illustrates HostID management operations performed by the HWMM controller 1420 in accordance with some embodiments. In response to an add or delete input command 1600, the HWMM controller reads the corresponding page table entry from the HWMM page table 1351, including the HostID field. If the command is an add command (i.e., to add a new entry or share an entry with another host) the add command is validated at 1602 and if the command is a delete command (i.e., to invalidate or flush an entry) the delete command is validated at 1603. Validation may be performed using one or more of the techniques described above (e.g., ensuring that the page table 1351 does not include entries for the pages to be allocated which are currently associated with other host processors). Once validated, page allocation, page share allocation, or page deallocation is performed at 1604, and at 1605, the new HostID field is written to the HWMM page table 1351.

In some embodiments, memory zeroing operations are managed by the HWMM controller 1420, which offloads this responsibility from software executed on a host processor. When page deallocation during operational mode reaches the last LMA entry from HWMM page table, it flushes out (zeroes out) the corresponding portions of the memory immediately after deallocating the host TLB.

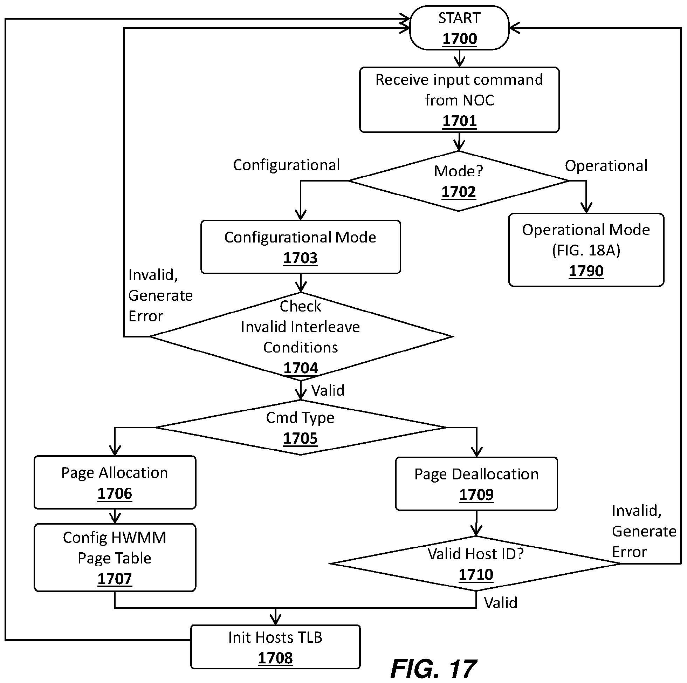

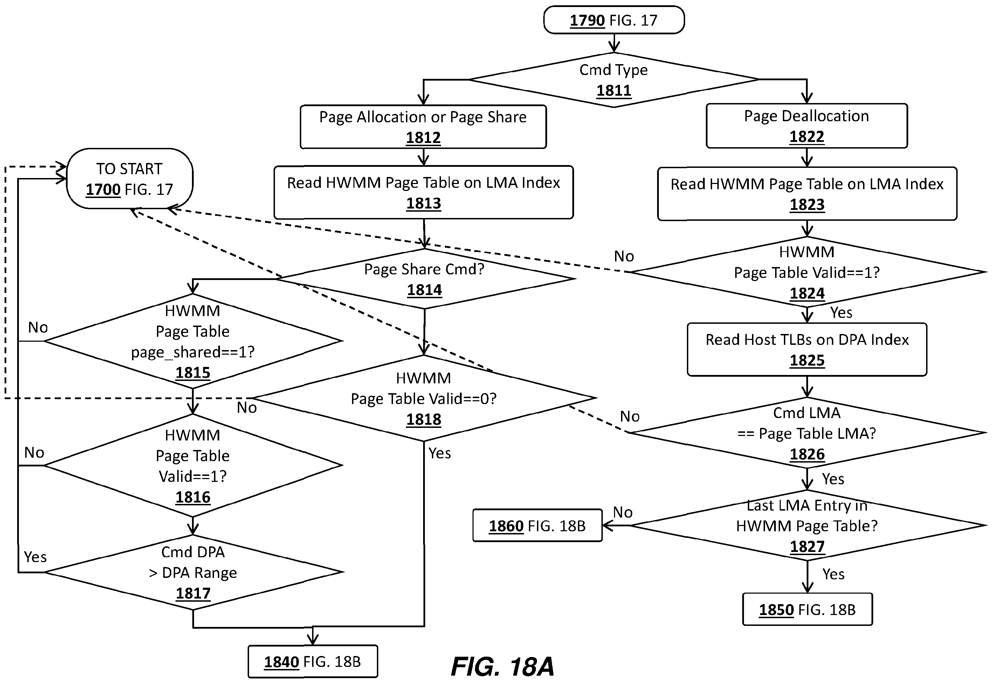

**Figure 17** illustrates a method for the configurational mode in accordance with one or more embodiments. At 1701, the input command is received over the NOC. In response to a determination of the current mode at 1702, the HWMM enters configurational mode at 1703 or operational mode at 1790 (Figure 18A). Interleave conditions are checked at 1704. If the interleave conditions are invalid, an error is generated to be handled by the host processor. If the interleave conditions are valid then the command is evaluated to determine the command type at 1705.

At 1706, if the command is a page allocation, the HWMM page table is configured in accordance with the page allocation at 1707 (e.g., populating the entries of the page table with corresponding address mappings, permissions, and other relevant page table data and metadata). At 1708, one or more host TLBs are initialized to include consistent mappings (e.g., to store the corresponding DPA-LMA mappings and other relevant data).

At 1709, if the command is a page deallocation, security checks are performed to validate the host ID at 1710. If these checks fail, then an error is generated to the host processor (e.g., the host ID provided does not exist). If the host ID is determined to be valid, then at 1708, the host TLBs are initialized to include consistent mappings (e.g., deallocating TLB entries associated with the deallocated pages).

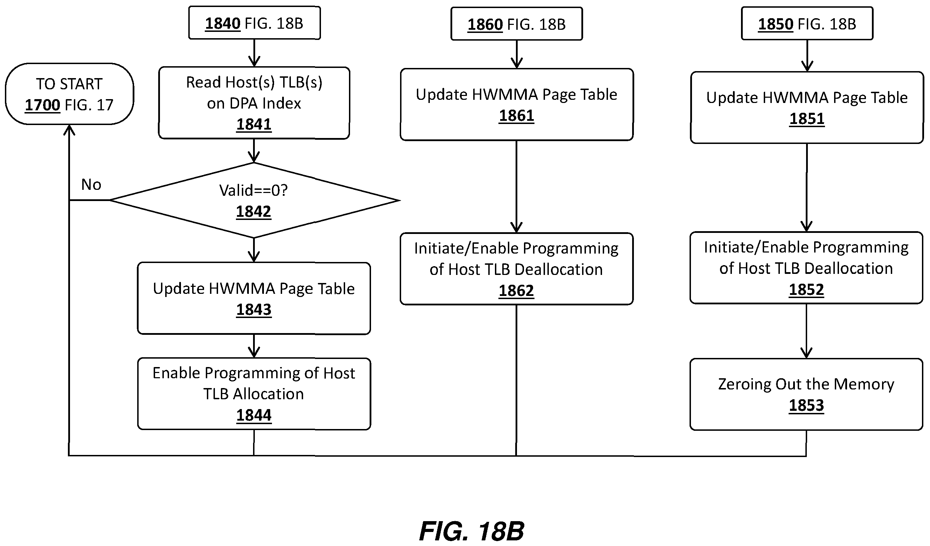

If the mode check at 1702 indicates operational mode, then the method jumps to 1790 in **Figure 18A****.** The command type is determined at 1811. At 1812, the command is a page allocation or page share command and at 1822 the command is a page deallocation command. At 1814 if the command is a page share command (i.e., to share a page table entry with another host), then at 1818 a check is performed to determine if the page shared bit is set to 1, at 1816 to determine if the entry is valid, and at 1817 to determine if the DPA is within the allowable range. If any of these variables are not properly indicated, then an error is generated and the process returns to 1700. If all checks pass, then the process jumps to 1840 in Figure 18B. At 1841, the TLBs of the hosts are read using the corresponding DPA as an index to ensure they are valid at 1842. If not, then an error is generated and the process returns to 1700. If so, then the HWMMA page table is updated at 1843 (e.g., adding the new HostID to the shared entry) and at 1844 programming of the host TLB allocations is initiated/enabled.

Returning to **Figure 18A****,** if the command is not a page share command at 1814, then the command is a page allocation command. If the corresponding page table entry is determined to be invalid at 1818, then an error is generated and the process returns to 1700. If it is valid, then the process again returns to 1840 in Figure 18B and the subsequent operations are performed as described above.

Returning again to **Figure 18A****,** in response to a page deallocation at 1822, the corresponding entry of the HWMM page table is read using the LMA index at 1823. If the entry is invalid, determined at 1824, then an error is generated and the process returns to 1700. If the entry is valid, then the host TLBs are read using the DPA index (i.e., to identify corresponding TLB entries). A check is performed at 1826 to ensure that the LMA in the command is the same as the LMA in the corresponding TLB and page table entries. If not, then an error is generated and the process returns to 1700. If so, then if this is the last entry in the HWMM page table, determined at 1827, the process jumps to 1850 in **Figure 18B****.** Otherwise, it jumps to 1860 in **Figure 18B****.**

At 1851 or 1861, the HWMMA page table is updated, invalidating the entry and updating the HostID fields. At 1852 or 1862, the programming of the host TLB entries is initiated/enabled (i.e., to invalidate the corresponding entries). In addition, if the entry is the last entry in the HWMM page table, then at 1853, an additional operation of zeroing out the memory is performed at 1853, to ensure that the underlying data is protected.

Embodiments of the invention provide secure hardware solutions to multi-host systems, which ensure security against software attacks and data breaches. These embodiments employ robust measures to safeguard the dynamic allocation and deallocation of memory, thereby preventing unauthorized access and protecting data privacy. Given its applicability in multi-host systems during memory accesses, these embodiments of the invention enhance productivity and efficiency.

### EXAMPLES

The following are example implementations of different embodiments of the invention.

Example 1. An apparatus, comprising: a network-on-chip (NoC) interconnect fabric; first interface circuitry to couple a plurality of host processors and corresponding translation lookaside buffers (TLBs) of the plurality of host processors to the NoC interconnect fabric; a hardware memory manager coupled to the NoC interconnect fabric, the hardware memory manager comprising: page table circuitry to store page management information in a plurality of page table entries (PTEs), each PTE corresponding to a TLB entry in at least one of the TLBs of the plurality of host processors, the page management information including a host identifier (ID) field to indicate at least one of the plurality of host processors associated with the PTE; a memory management controller to perform security checks on commands received from the plurality of host processors, wherein responsive to a first command from a first host processor to perform an allocation or deallocation of a first TLB entry corresponding to a first PTE of the plurality of PTEs, the memory management controller is to prevent the allocation or deallocation if a first host ID in the first PTE does not correspond to the first host processor.

Example 2. The apparatus of example 1, wherein if the first host ID in the first PTE corresponds to the first host processor, then the memory management controller is to responsively perform the allocation or deallocation with respect to the first PTE and is to initiate or enable a corresponding allocation or deallocation operation with respect to the first TLB entry.

Example 3. The apparatus of examples 1 or 2, wherein the allocation comprises sharing a page corresponding to the first PTE with a second host processor, wherein the memory management controller is to add a second host ID corresponding to the second host processor to the first PTE only if a page sharing indication in the first PTE indicates that the page can be shared.

Example 4. The apparatus of any of examples 1-3, wherein the deallocation comprises invalidating the first PTE by modifying a valid bit in the first PTE, wherein the memory management controller is to responsively initiate or enable a corresponding invalidation of the first TLB entry.

Example 5. The apparatus of any of examples 1-4, wherein if the first command indicates an allocation, the security checks include one or more of: determining if the first PTE is valid or invalid, determining if the first TLB entry is valid or invalid, and determining if a device physical address (DPA) indicated in the first command is outside of an allowable DPA range.

Example 6. The apparatus of any of examples 1-5, wherein if the first command indicates a deallocation, the security checks include one or more of: determining if a local memory address (LMA) indicated in the first command matches an LMA in the first TLB entry and determining if the first PTE is valid or invalid.

Example 7. The apparatus of any of examples 1-6, further comprising: extension memory control circuitry to couple the plurality of host processors to an extension memory, the extension memory control circuitry to provide access to device physical addresses of the extension memory in accordance with the plurality of page table entries (PTEs) and the TLBs of the plurality of host processors.

Example 8. The apparatus of any of examples 1-7 wherein the extension memory control circuitry comprises a compute express link (CXL) extension memory controller operable in accordance with a CXL extension memory protocol.

Example 9. The apparatus of any of examples 1-8, wherein the a hardware memory manager further comprises: a first interface to receive first request messages from the plurality of host processors, the first command comprising one of the first request messages; and a second interface to transmit second request messages to the plurality of host processors, the second requests including one or more requests to access the corresponding TLBs of the plurality of host processors.

Example 10. A method, comprising: communicatively coupling a plurality of host processors and corresponding translation lookaside buffers (TLBs) of the plurality of host processors over a network-on-chip (NoC) interconnect fabric; storing, in page table circuitry, page management information in a plurality of page table entries (PTEs), each PTE corresponding to a TLB entry in at least one of the TLBs of the plurality of host processors, the page management information including a host identifier (ID) field to indicate at least one of the plurality of host processors associated with the PTE; performing security checks on commands received from the plurality of host processors, wherein responsive to a first command from a first host processor to perform an allocation or deallocation of a first TLB entry corresponding to a first PTE of the plurality of PTEs, preventing the allocation or deallocation if a first host ID in the first PTE does not correspond to the first host processor.

Example 11. The method of example 10, wherein if the first host ID in the first PTE corresponds to the first host processor, then responsively performing the allocation or deallocation with respect to the first PTE and initiating or enabling a corresponding allocation or deallocation operation with respect to the first TLB entry.

Example 12. The method of examples 10 or 11, wherein the allocation comprises sharing a page corresponding to the first PTE with a second host processor, wherein a second host ID corresponding to the second host processor is to be added to the first PTE only if a page sharing indication in the first PTE indicates that the page can be shared.

Example 13. The method of any of examples 10-11, wherein the deallocation comprises invalidating the first PTE by modifying a valid bit in the first PTE, the method further comprising: responsively initiating or enable a corresponding invalidation of the first TLB entry.

Example 14. The method of any of examples 10-13, wherein if the first command indicates an allocation, the security checks include one or more of: determining if the first PTE is valid or invalid, determining if the first TLB entry is valid or invalid, and determining if a device physical address (DPA) indicated in the first command is outside of an allowable DPA range.

Example 15. The method of any of examples 10-14, wherein if the first command indicates a deallocation, the security checks include one or more of: determining if a local memory address (LMA) indicated in the first command matches an LMA in the first TLB entry and determining if the first PTE is valid or invalid.

Example 16. The method of any of examples 10-15, further comprising: communicatively coupling the plurality of host processors to an extension memory, including providing access to device physical addresses of the extension memory in accordance with the plurality of page table entries (PTEs) and the corresponding TLBs of the plurality of host processors.

Example 17. A machine-readable medium having program code stored thereon which, when executed by a machine, causes the machine to perform operations, comprising: communicatively coupling a plurality of host processors and corresponding translation lookaside buffers (TLBs) of the plurality of host processors over a network-on-chip (NoC) interconnect fabric; storing, in page table circuitry, page management information in a plurality of page table entries (PTEs), each PTE corresponding to a TLB entry in at least one of the TLBs of the plurality of host processors, the page management information including a host identifier (ID) field to indicate at least one of the plurality of host processors associated with the PTE; performing security checks on commands received from the plurality of host processors, wherein responsive to a first command from a first host processor to perform an allocation or deallocation of a first TLB entry corresponding to a first PTE of the plurality of PTEs, preventing the allocation or deallocation if a first host ID in the first PTE does not correspond to the first host processor.

Example 18. The machine-readable medium of example 17, wherein if the first host ID in the first PTE corresponds to the first host processor, then responsively performing the allocation or deallocation with respect to the first PTE and initiating or enabling a corresponding allocation or deallocation operation with respect to the first TLB entry.

Example 19. The machine-readable medium of examples 17 or 18, wherein the allocation comprises sharing a page corresponding to the first PTE with a second host processor, wherein a second host ID corresponding to the second host processor is to be added to the first PTE only if a page sharing indication in the first PTE indicates that the correspond page can be shared.

Example 20. The machine-readable medium of any of examples 17-19, wherein the deallocation comprises invalidating the first PTE by modifying a valid bit in the first PTE, the machine-readable medium further comprising program code to perform operations of: responsively initiating or enable a corresponding invalidation of the first TLB entry.

Example 21. The machine-readable medium of any of examples 17-20, wherein if the first command indicates an allocation, the security checks include one or more of: determining if the first PTE is valid or invalid, determining if the first TLB entry is valid or invalid, and determining if a device physical address (DPA) indicated in the first command is outside of an allowable DPA range.

Example 22. The machine-readable medium of any of examples 17-21, wherein if the first command indicates a deallocation, the security checks include one or more of: determining if a local memory address (LMA) indicated in the first command matches an LMA in the first TLB entry and determining if the first PTE is valid or invalid.

Example 23. The machine-readable medium of any of examples 17-22, further comprising program code to cause the machine to perform operations of: communicatively coupling the plurality of host processors to an extension memory, including providing access to device physical addresses of the extension memory in accordance with the plurality of page table entries (PTEs) and the corresponding TLBs of the plurality of host processors.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. An apparatus, comprising:
a network-on-chip (NoC) interconnect fabric;
first interface circuitry to couple a plurality of host processors and corresponding translation lookaside buffers (TLBs) of the plurality of host processors to the NoC interconnect fabric;
a hardware memory manager coupled to the NoC interconnect fabric, the hardware memory manager comprising:
page table circuitry to store page management information in a plurality of page table entries (PTEs), each PTE corresponding to a TLB entry in at least one of the TLBs of the plurality of host processors, the page management information including a host identifier (ID) field to indicate at least one of the plurality of host processors associated with the PTE;
a memory management controller to perform security checks on commands received from the plurality of host processors, wherein responsive to a first command from a first host processor to perform an allocation or deallocation of a first TLB entry corresponding to a first PTE of the plurality of PTEs, the memory management controller is to prevent the allocation or deallocation if a first host ID in the first PTE does not correspond to the first host processor.

2. The apparatus of claim 1, wherein if the first host ID in the first PTE corresponds to the first host processor, then the memory management controller is to responsively perform the allocation or deallocation with respect to the first PTE and is to initiate or enable a corresponding allocation or deallocation operation with respect to the first TLB entry.

3. The apparatus of claim 2, wherein the allocation comprises sharing a page corresponding to the first PTE with a second host processor, wherein the memory management controller is to add a second host ID corresponding to the second host processor to the first PTE only if a page sharing indication in the first PTE indicates that the page can be shared.

4. The apparatus of claims 2 or 3, wherein the deallocation comprises invalidating the first PTE by modifying a valid bit in the first PTE, wherein the memory management controller is to responsively initiate or enable a corresponding invalidation of the first TLB entry.

5. The apparatus of any of claims 1 to 4, wherein if the first command indicates an allocation, the security checks include one or more of: determining if the first PTE is valid or invalid, determining if the first TLB entry is valid or invalid, and determining if a device physical address (DPA) indicated in the first command is outside of an allowable DPA range.

6. The apparatus of any of claims 1 to 5, wherein if the first command indicates a deallocation, the security checks include one or more of: determining if a local memory address (LMA) indicated in the first command matches an LMA in the first TLB entry and determining if the first PTE is valid or invalid.

7. The apparatus of any of claims 1 to 6, further comprising:
extension memory control circuitry to couple the plurality of host processors to an extension memory, the extension memory control circuitry to provide access to device physical addresses of the extension memory in accordance with the plurality of page table entries (PTEs) and the TLBs of the plurality of host processors.

8. The apparatus of claim 7 wherein the extension memory control circuitry comprises a compute express link (CXL) extension memory controller operable in accordance with a CXL extension memory protocol.

9. The apparatus of any of claims 1 to 7, wherein the a hardware memory manager further comprises:
a first interface to receive first request messages from the plurality of host
processors, the first command comprising one of the first request messages; and a second interface to transmit second request messages to the plurality of host
processors, the second requests including one or more requests to access the
corresponding TLBs of the plurality of host processors.

10. A method, comprising:
communicatively coupling a plurality of host processors and corresponding translation lookaside buffers (TLBs) of the plurality of host processors to a network-on-chip (NoC) interconnect fabric;
storing, in page table circuitry, page management information in a plurality of page table entries (PTEs), each PTE corresponding to a TLB entry in at least one of the TLBs of the plurality of host processors, the page management information including a host identifier (ID) field to indicate at least one of the plurality of host processors associated with the PTE;
performing security checks on commands received from the plurality of host processors, wherein responsive to a first command from a first host processor to perform an allocation or deallocation of a first TLB entry corresponding to a first PTE of the plurality of PTEs, preventing the allocation or deallocation if a first host ID in the first PTE does not correspond to the first host processor.

11. The method of claim 10, wherein if the first host ID in the first PTE corresponds to the first host processor, then responsively performing the allocation or deallocation with respect to the first PTE and initiating or enabling a corresponding allocation or deallocation operation with respect to the first TLB entry.

12. The method of claim 11, wherein the allocation comprises sharing a page corresponding to the first PTE with a second host processor, wherein a second host ID corresponding to the second host processor is to be added to the first PTE only if a page sharing indication in the first PTE indicates that the page can be shared.

13. The method of any of claims 11 to 12, wherein the deallocation comprises invalidating the first PTE by modifying a valid bit in the first PTE, the method further comprising: responsively initiating or enable a corresponding invalidation of the first TLB entry.

14. The method of any of claims 10 to 13, wherein if the first command indicates an allocation, the security checks include one or more of: determining if the first PTE is valid or invalid, determining if the first TLB entry is valid or invalid, and determining if a device physical address (DPA) indicated in the first command is outside of an allowable DPA range.

15. The method of any of claims 10 to 14, wherein if the first command indicates a deallocation, the security checks include one or more of: determining if a local memory address (LMA) indicated in the first command matches an LMA in the first TLB entry and determining if the first PTE is valid or invalid.
